# EUROPEAN PATENT APPLICATION

(11) **EP 3 035 608 A1**
(43) Date of publication of application: **22.06.2016**
(21) Application number: 14307050.6
(22) Date of filing: 16.12.2014
(51) Int. Cl.: H04L 12/58, H04L 12/18

(54) **Creating a connection between several communication addresses**

(71) Applicant: Cattan, Edgard, 75018 Paris (FR)
(72) Inventor: Cattan, Edgard, 75018 Paris (FR)
(74) Representative: den Braber, Gerard Paul

(57) **Abstract**

Creating a connection between several communication addresses (109, 110) involves an intermediate entity (105), such as, for example, a server. The intermediate entity (105) has a plurality of registered users (106, 107,108). A registered user has at least one communication address, which is known to the intermediate entity. The intermediate entity (105) defines a connection between respective communication addresses (109, 110) of registered users (106, 107) upon reception of respective connection requests (255, 256) from these respective registered users (106, 107) if their respective connection requests comprise a same set of codes (251, 253). The intermediate entity (105) then transmits connection definition data (258) to a communication address of a registered user (106) who has submitted the connection request (255). The connection definition data includes a connection identifier (257) for inclusion in a message from a communication address of the registered user (106) in the connection so that the intermediate entity (105) can route this message to other communication addresses in the connection.

## Description

### FIELD OF THE INVENTION

An aspect of the invention relates to a method of creating a connection between several communication addresses. Messages may then be exchanged between these communication addresses through the connection that has been created. A communication address may be for, example, an identification code of a device or an application installed on a device, an e-mail address, a telephone number, and a user account with, for example, a server, a service, or a social medium. Other aspects of the invention relate to a communication device, and a computer program.

### BACKGROUND OF THE INVENTION

Several persons, two or more, who physically meet may desire to continue to be able to continue exchange messages between them, even when they are physically separated afterwards. Each one of these persons may then provide the other person, or persons, a communication address under which he/she can be reached. A connection between these persons is then created by this exchange of communication addresses. Communication addresses may be exchanged by means of, for example, exchanging business cards, which may be in an electronic form.

Communications addresses may also be exchanged electronically, as it were, in order to create a connection. For example, Chinese patent publication CN103442086 describes an electronic name card exchange method based on mobile terminals that recognize two-dimensional codes. In this method, a user registers with a server or adds a new electronic name card to the server. The server then stores the ID of the user or information of the newly added electronic name card. The server generates a two-dimensional code corresponding to the ID of the user or the newly added electronic name card. Electronic name cards are exchanged as follows. A mobile terminal of the user allows a mobile phone of another user to scan the two-dimensional code that has been generated as described hereinbefore. The mobile phone of the other user can use then the two-dimensional code that has been scanned to retrieve from the server information of the electronic name card corresponding to this code.

### SUMMARY OF THE INVENTION

There is a need for a technique that allows defining a connection between several communication addresses in a private and secure fashion.

In order to better address this need, in accordance with an aspect of the invention, there is provided a method of creating a connection between several communication addresses as defined in claim 1, which is appended to the description. Other aspects of the invention concern a communication device and a computer program as defined in claims 14 and 15, respectively, which are appended to the description.

In each of these aspects, a connection between several communication addresses, two or more, may be created without disclosure of these communication addresses. Consequently, two registered users whose communication addresses are connected do not necessarily know each other's communication addresses. The two registered users may communicate with each other, but none of them can disseminate the communication address of the other. The same applies for a connection between more than two registered users, who may form a group.

A connection is created on condition that respective connection requests from respective registered users comprise a same set of codes. This implies that there has been a preceding communication between the respective registered users that allowed them to have the same set of codes. This code transmission, in turn, implies that these registered users consent to creating the connection. Consent can thus relatively simply be expressed in this manner. The connection can be created relatively easily. Moreover, the condition of the same set of codes reduces a risk of errors in creating connections. All these factors contribute to defining a connection between several communication addresses, two or more, in a private and secure fashion.

An embodiment of the invention may comprise one or more additional features defined in the dependent claims, which are appended to the description.

For the purpose of illustration, a detailed description of some embodiments of the invention is presented with reference to accompanying drawings.

### BRIEF DESCRIPTION OF THE DRAWINGS

FIG. 1 is a block diagram of an infrastructure in which a connection between various communication addresses can be defined.
FIG. 2 is a flow chart of a method of creating a connection between two respective communication addresses of two respective users.
FIG. 3 is a flow chart of a method of communicating that can be carried out once the method of creating a connection represented in FIG. 2 has been completed.
FIG. 4 is a flow chart of an alternative method of creating a connection between two respective communication addresses of two respective users.
FIG. 5 is a flow chart of a group-joining method, which allows a user who is already member of a group to invite and make another user member of the group.
FIG. 6 is a flow chart of a method of transposing a connection that has been created between communication addresses of a given type to a connection between communication addresses of another type;

### DETAILED DESCRIPTION

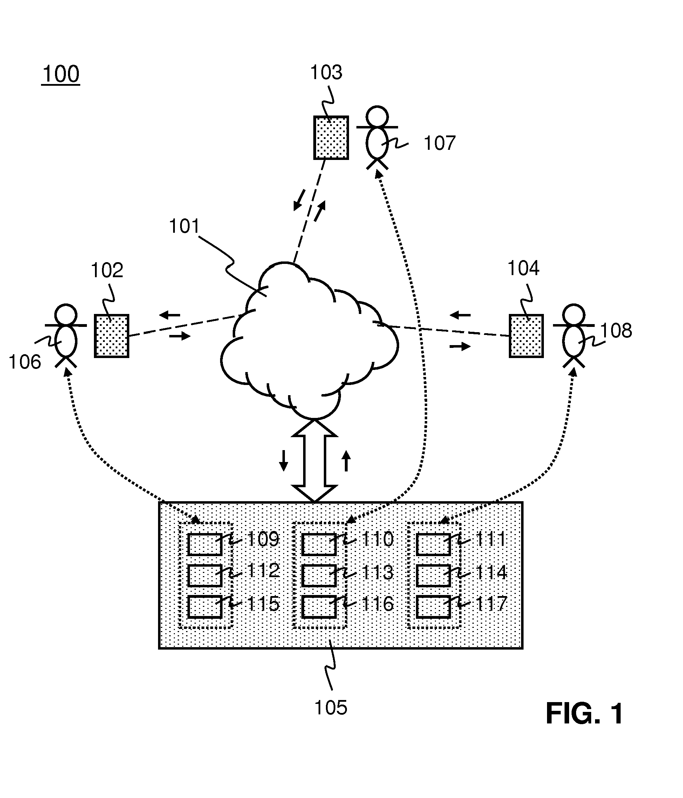

FIG. 1 schematically illustrates an infrastructure for defining a connection between various communication addresses. The infrastructure 100 is represented in a block diagram. The infrastructure 100 comprises a communication medium 101, various communication devices 102, 103, 104, and an intermediate entity 105. For the sake of simplicity, FIG. 1 illustrates three respective communication devices 102, 103, 104 only, which belong to three respective users 106, 107, 108. The three respective communication devices 102, 103, 104 and their three respective users 106, 107, 108 are designated and distinguished from each other by means of reference letters A, B, and C, respectively.

The communication medium 101 may comprise, for example, the Internet, as well as other communication networks. The communication medium 101 will be referred to hereinafter as the Internet 101 for reasons of illustration and convenience. The three respective communication devices A 102, B 103, and C 104 may each be in the form of, for example, a so-called smart phone. The three respective communication devices will be referred to hereinafter as smart phones A 102, B 103, and C 104 for reasons of illustration and convenience. The intermediate entity 105 may be in the form of, for example, a server or a group of servers. More specifically, the intermediate entity 105 may be in the form of a Web service that is running on a server or a group of servers. The intermediate entity 105 will be referred to hereinafter as server 105 for reasons of illustration and convenience.

In more detail, smart phone A 102 may comprise a processor and a memory, which are not represented in FIG. 1 for reasons of simplicity. The processor may comprise one or various processing circuits capable of executing instructions in the form of, for example, binary codes. The memory may comprise one or various memory circuits capable of storing such instructions, as well as other data. The same applies to smart phones B 103 and C 104, as well as to the server 105, if understood to be a hardware entity, which may also comprise a processor and a memory. In addition, smart phones A 102, B 103, and C 104 may each comprise a touch display screen and a camera.

In the infrastructure 100 illustrated in FIG. 1, the server 105 allows for creating connections between respective communication addresses of respective users in a secure and private fashion. The server 105 allows for creating connections of a bilateral type, such as, for example, a connection between a communication address of user A 106 and a communication address of user B 107. The server 105 may also allow for creating connections of a group type, such as, for example, a connection between a communication address of user A 106, a communication address of user B 107, and a communication address of user C 108. A communication address may be in the form of, for example, an identification code of a device or an application installed on a device, an e-mail address, Internet protocol (IP) address, a telephone number, and a user account with, for example, a server, a service, or a social medium.

In order to create a connection, a user may first create an account with the server 105. The user then becomes a registered user. In order to create an account, the user may download an application software program and install this on his/her smart phone. The application software program may allow communications with other smart phones of other registered users, on which the application software program, or a variant thereof, has also been installed. The application software program that has been installed on a smart phone may then have an identification code that may be unique to this instance of this program. The identification code may constitute a communication address. A smart phone may also have a physical address, which may be unique, such as, for example, a media access control (MAC) address. This physical address may also constitute a communication address. The user account on the server 105 may also constitute a communication address.

The user, who has registered, may specify one or various communication addresses with the server 105. The user may further define a username and a password. The user name may be in the form of, for example, an e-mail address, which may then also constitute a communication address specified with the server 105. The server 105 may assign a unique user identifier (ID) to the user. The server 105 may generate a user ID for a user by applying a hash function to a communication address that the user has specified. Accordingly, a so-called hash is obtained to which the server 105 may add a random value so as to generate the user ID.

In the sequel, it will be assumed that user A 106, user B 107, and user C 108 are each registered users. In the server 105, various types of communication addresses are associated with these respective users. Respective identification codes 109, 110, 111 of the aforementioned application software program, which has been installed on smart phones A 102, B 103, and C 104, are associated with users A 106, B 107, and C 108, respectively. Respective physical addresses 112, 113, 114 of smart phones A 102, B 103, and C 104 are associated with users A 106, B 107, and C 108, respectively. Users A 106, B 107, and C 108 have specified respective user accounts 115, 116, 117 on a same social media network.

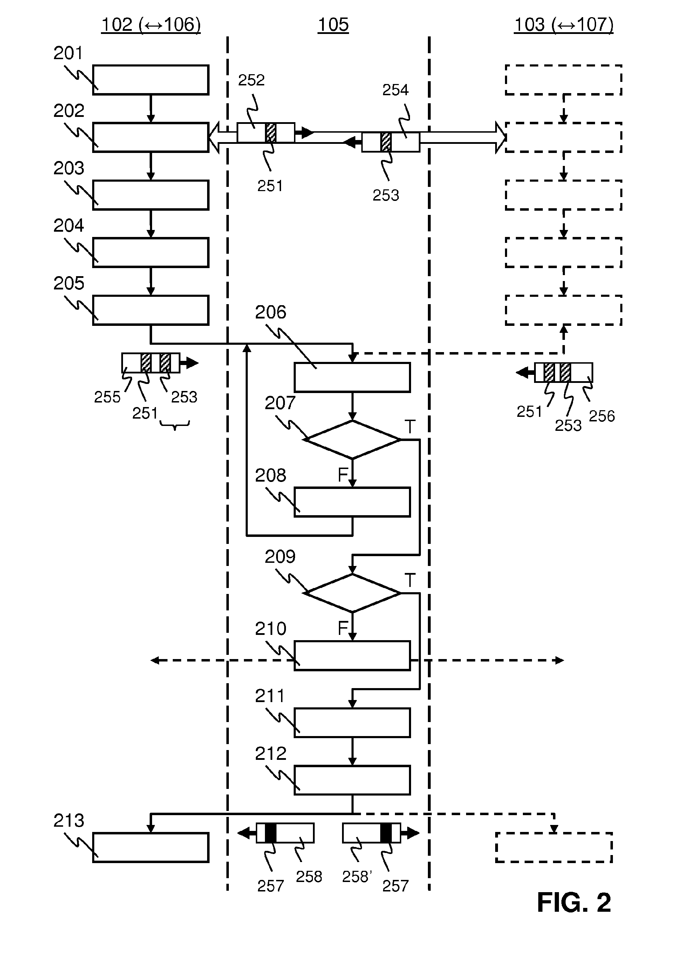

FIG. 2 schematically illustrates a method of creating a connection between a communication address of user A 106 and a communication address of user B 107. The method is illustrated in a flow chart. The method comprises a series of steps that involve smart phone A 102, smart phone B 103, and the server 105. The flow chart is vertically divided into three sections. A left-hand section illustrates various steps that the smart phone A 102 carries out. A middle section illustrates various steps that the server 105 carries out. A right-hand section illustrates various steps that smart phone B 103 carries out.

The left-hand section of the flow chart can be regarded as a representation of the application software program that has been installed on smart phone A 102. This software installation may be carried out, for example, in association with user A 106 creating his/her account with the server 105. The application software program enables smart phone A 102 to carry out the steps presented in the left-hand section of the flow chart, which will be discussed hereinafter. Likewise, the right-hand section of the flow chart can be regarded as a representation of the application software program that has been installed on smart phone B 103.

The application software program installed on smart phone A 102 may be identical to that installed on smart phone B 103, although their respective identification codes are different. That is, the left-hand section and the right-hand section of a flow chart may jointly be regarded as a representation of the application software program that has been installed on smart phone A 102 and on smart phone B 103, as well as on other smart phones of other registered users.

The middle section of the flow chart can be regarded as a service software program that has been installed on the server 105. This service software program enables the server 105 to carry out the steps presented in the middle section of the flow chart, which will be discussed hereinafter.

In a connection request initiation step 201, smart phone A 102 receives an indication from user A 106 that he/she seeks to create a connection with another person, who is user B 107 in this example. Smart phone A 102 may receive this indication by, for example, user A 106 launching the application software program concerned.

A default setting may be that the connection is intended for exchanging messages through, for example, the application software program. This implies that the connection is to be created between the following communication addresses. On the one hand, the aforementioned identification code 109 or the aforementioned physical address 112, or a combination of both, which belong to user A 102. On the other hand, the aforementioned identification code 110 or the aforementioned physical address 113, or a combination of both, which belong to user B 103. In the sequel, it will be assumed that the default setting applies and that the connection will be made between the aforementioned identification codes 109 and 111 of the application software program on smart phones A 102 and B 103, respectively.

Smart phone A 102 may allow user A 106 to deviate from the default setting by indicating that the connection is intended for exchanging messages through another medium, such as, for example, e-mail. That is, user A 106 then implicitly indicates that the connection should be made between his/her e-mail address and that of user B107. User A 106 may provide these and further indications by, for example, touching menu items that smart phone A 102 displays on its touch display screen.

Smart phone A 102 may prompt user A 106 to indicate whether the connection to be created is bilateral, or of a group type, or of yet another type. In this example, a bilateral connection is created. An example of creating a group type connection will be presented hereinafter.

Smart phone A 102 may further prompt user A 106 to specify a name under which he/she wants to present himself/herself in the connection to be created. For example, smart phone A 102 may display a field associated with a mention, such as, for example, "My Name:". User A 106 may then type in this name field the name he/she wants to use in the connection, which may be, for example, his/her surname, or a nickname. Smart phone A 102 may present a default name in the name field, or may present a drop-down button that user A 106 may click. In the latter option, smart phone A 102 may display a list of names from which user A 106 may select one. This list may also comprise an item "other name" that allows user A 106 to define a different name, which may be included in the list a next time a connection is to be created. In any case, the thus specified name may be communicated to user B 107.

User A 106 may further indicate a manner in which a code 251 should be defined that expresses his/her consent to creating the connection. This code 251 may be included in connection creation data 252 for transmission to user B 107, as a token of consent. The connection creation data 252 may further include the name as specified hereinbefore.

For example, user A 106 may indicate that smart phone A 102 should generate the code 251. This internal code generation may be a default setting. That is, in case user A 106 does not provide any indication on the manner in which the code 251 should be generated, the code 251 is generated internally, within smart phone A 102. In the sequel, this will be assumed to be the case by way of example. Smart phone A 102 may generate the code 251 in, for example, a one-time fashion by means of a pseudo random generator.

As another example, user A 106 may indicate that smart phone A 102 should obtain the code 251 from another entity, which can be trusted, such as, for example, the server 105. In this case, the other entity, which may be the server 105, may generate the code 251 in a one-time fashion and transmit this code to smart phone A 102, for example, on request of smart phone A 102. This code transmission is then preferably carried out in a secure manner, such as, for example, by means of encryption.

In yet another example, user A 106 may indicate that he/she will provide smart phone A 102 with the code 251 expressing his/her consent to creating the connection. User A 106 may provide the code 251 by, for example, typing the code 251 on a keyboard that smart phone A 102 displays on its touch display screen. As another example, user A 106 may pronounce the code 251 in front of smart phone A 102 and smart phone B 103, while these are located close to each other so that these both can capture this code pronunciation. Smart phone A 102 and smart phone B 103 may then each convert this captured pronunciation into a series of characters that represent the code 251.

Alternatively, smart phone A 102 and smart phone B 103 may use a digital or a binary signal representation of a sound or of an image, which is captured identically and, preferably, simultaneously, as the code 251 that expresses consent. Such a captured sound may be, for example, the pronunciation of the code mentioned hereinbefore. It should be noted such a code based on a captured sound or image may represent consent of both user A 106 and user B 107 to creating the connection. This is because both users A 106 and B 107 have caused their smart phones A 102 and B 103 to carry out the connection creation initiation step and placed these in a mode, logically and physically, to capture the same sound, or the same image, or both. Moreover, the code 251 may further comprise an identical time indication, proving that the sound or the image on which the code is based, has indeed been captured simultaneously, which constitutes a strong token of consent.

In the case of a user provided code, as described in the preceding paragraph, smart phone A 102 may verify the code 251 that user A 106 has specified, so as to determine whether the code meets one or several criteria. This particularly applies when the code 251 is in the form of a series of characters. For example, smart phone A 102 may verify whether the code comprises a sufficient number of characters, or not, that is, whether the code 251 is sufficiently long, or not. The smart phone A 102 may also verify whether the code 251 comprises a sufficient number of different types of characters, or not, for example, whether the code 251 comprises at least one alphabetic character, at least one numerical character, and at least one sign character, or not. The smart phone A 102 may also verify whether the code 251 has been previously used, or not, and, if so, whether this previous use is sufficiently long ago, or not.

User A 106 may further define a period of validity for the code 251 that expresses his/her consent to creating the connection. This implies that the connection should be created within this period. By defining a period of validity, user A 106 defines a window of opportunity for creating the connection. Accordingly, user A 106 can prevent user B 107 from benefiting from his/her consent to creating the connection in a relatively distant future, when the user A 106 may have forgotten that he/she sought to establish a connection with user B 107, or when user A 106 may even no longer wish to establish this connection.

User A 106 may further indicate a code strength, which defines, for example, a number of characters the code should have. The code strength may also define a number of different types of characters that should be present in the code 251. The code strength may be set to a default value, or set of values, which may depend on the type of connection to be created and the manner in which the connection is created.

User A 106 may further indicate a manner in which the connection creation data 252 should be exchanged with user B 107. For example, user A 106 may indicate that his/her smart phone A 102 should present this connection creation data 252, or at least a part thereof, in the form of alphanumerical characters displayed on the touch display screen. User A 106 may further indicate that user B 107 will use the same presentation option, or this may be implicit.

As another example, user A 106 may indicate that his/her smart phone A 102 should present data for a connection request to user B 107 in the form of a data matrix displayed on the touch display screen. User A 106 may further indicate that user B 107 will use the same presentation option, or this may be implicit. The data matrix may be in the form of, for example, a so-called quick reference (QR) code.

As yet another example, user A 106 may indicate that his/her smart phone A 102 should transmit data for a connection request to user B 107 by means of a wireless transmission. This wireless transmission can be carried out by means of, for example, near field communication (NFC) technology. This is possible if smart phone A 102 and smart phone B 103 each comprise an NFC transceiver module.

Here too, a default manner of exchanging connection creation data may be defined, which applies if user A 106 does not provide an indication on the manner in which the connection creation data should be defined. In the sequel, it will be assumed, by way of example, that smart phone A 102 presents the connection creation data 252 to user B 107 in the form of a data matrix displayed on the touch display screen.

It is assumed that, reciprocally, user B 107 causes his/her smart phone B 103 to carry out a similar connection request initiation step. That is, smart phone B 103 will obtain or generate a code 253 expressing consent of user B 107 to creating the connection. Smart phone B may also obtain a name under which user B 107 wants to present himself/herself in the connection. The code 253 and the name of user B 107 are to be transmitted to user A 106. To that end, the code and the name may be included in connection creation data 254 that smart phone B 103 will present to the user A 106, or that smart phone B 103 will transmit to smart phone A 102.

In a connection creation data exchange step 202, smart phone A 102 transmits the connection creation data 252 of user A 106 to user B 107 in a manner defined by user A 106, or in a default manner, as described hereinbefore. As mentioned hereinbefore, the connection creation data 252 of user A 106 may comprise the code 251 that represents user A's 106 consent to creating the connection. The connection creation data 252 may further comprise the name under which user A 106 presents himself/herself in this connection

It is assumed here, by way of example, that smart phone A 102 displays the connection creation data 252 of user A 106 on its touch display screen in the form of a data matrix. It is further assumed that smart phone B 103 also displays the connection creation data 254 of user B 107 on its touch display screen in the form of a data matrix. In case smart phones A 102 and B 103 both have a frontally placed camera, users A 106 and B 107 may place their respective smart phones A 102 and B 103 in front of each other, so that the respective touch display screens and the respective cameras face each other. Smart phone A 102 can then capture with its camera the data matrix that is displayed on smart phone B 103 and, reciprocally, smart phone B 103 can capture with its camera the data matrix that is displayed on smart phone A 102. Accordingly, smart phone A 102 obtains the connection creation data 254 of user B 107 and, reciprocally, smart phone B 103 obtains the connection creation data 252 of user A 106. In a case at least one of smart phones A 102 and B 103 has no frontally placed camera, a different placing and capturing scheme can be used for exchanging connection creation data 252 and 254.

In a connection customization step 203, smart phone A 102 allows user A 106 to specify custom data concerning user B 107 and, more specifically, the connection to be created with this user. This custom data may define, for example, a graphical representation of user B 107 with whom the connection is to be created. For example, smart phone A 102 may prompt user A 106 to enter some text describing user B 107 and, in addition, where and when they have met. Smart phone A 102 may also automatically retrieve at least a part of this information from, for example, an agenda, which is present on smart phone A 102. As another example, smart phone A 102 may automatically retrieve information on "where" from a module adapted to detect a geographical location, such as, for example, a GPS module; GPS being an acronym of Global Positioning System. Smart phone A 102 may also prompt user A 106 to specify a color that should be used for the graphical representation of user B 107 as a contact in a contact list. Smart phone B may carry out a similar connection customization step, allowing user B 107 to specify custom data concerning user A 106, so as to better identify and remember who he/she is.

Once the connection customization step 203 has been completed, smart phone A 102 may add user B 107 to the contact list of user A 106 as a provisional, non-active item, which is pending to be activated. This provisional, non-active item may adopt, at least partially, the graphical representation of user B 107 that will appear in the contact list once the connection has been created. A graphical feature may indicate that user B 107 is not yet active as a contact, and has provisionally been added to the contact list. This graphical feature may comprise, for example, shading, an overlaid symbol, or a difference in contrast with respect to items in the contact list that represent active contacts. Similarly, smart phone B 103 may add user A 106 to the contact list of user B 107 as a provisional, non-active item, which is pending to be activated.

In a connection request generation step 204, smart phone A 102 generates a connection request 255 for submission to the server 105. The connection request 255 comprises the code 251 that user A 106 has provided to user B 107, as a token of user A's 106 consent to creating the connection. User A 106 can therefore consider this code 251 to be his/her own code. The connection request may further comprise the code 253 that user A 106 has received from user B 107 as a token of user B's 107 consent to creating the connection. User A 106 can therefore consider this code 253 to be a counterparty code. The connection request 255 of user A 106 may thus comprise a set of two codes: the own code 251 and the counter party code 253 from user B 107.

Smart phone A 102 may include further data in the connection request 255. This data may relate to a context in which the consent was given. For example, the connection request 255 may comprise an indication of time concerning the connection creation data exchange step 202. For example, this indication may specify when the code of user A 106 was transmitted to user B 107, as well as when the code of user B 107 was transmitted to user A 106, in case these transmissions were not carried out simultaneously. The connection request 255 may further comprise an indication of a location where these codes were exchanged. This additional contextual information on when and where codes 251 and 253 were exchanged may contribute to a higher level of reliability and security in creating the connection. The connection request 255 may further include the aforementioned period of validity, in case user A 106 has defined this period. The connection request 255 then thus specifies that the consent is valid only in this specified period.

The connection request 255 from user A 106 may further include at least a part of the custom data that user A 106 has specified concerning user B 107 and, more specifically, concerning the connection to be created with this user. The server 105 may store this information in association with the connection and in a data space reserved for the account that user A 106 has created. The connection request 255 may further comprise user A's 106 user ID.

Smart phone B may carry out a similar connection request generation step, in which smart phone B 103 generates a connection request 256 for submission to the server 105. This connection request comprises the code 251 that user B 107 has received from user A 106 as a token of user A's 106 consent to creating the connection. The connection request may further comprise the code 253 that user B 107 has provided to user A 106, as a token of user B's 107 consent to creating the connection. In addition, the connection request 256 of user B 107 may comprise further data as described hereinbefore in relation with user A 106, which may also include user B's 107 user ID.

In a connection request submission step 205, smart phone A 102 transmits the connection request 255 to the server 105. In case smart phone A 102 is connected to the Internet 101, the connection request 255 may be transmitted immediately following the connection request generation step 204. However, it may be that smart phone A 102 is not yet connected to the Internet 101 when the connection request 255 has been generated. For example, the steps described hereinbefore may be carried out off-line, with no connection to the Internet 101 or even any other communication network. In that case, smart phone A 102 may place the connection request 255 in a queue for transmission to the server 105 as soon as a connection with the Internet 101 has been established.

Smart phone B may carry out a similar connection request submission step. Consequently, the server 105 will receive two connection requests: the connection request 255 from smart phone A 102 and the connection request 256 from smart phone B 103. The server 105 may receive one of these requests earlier than the other. By way of example, it is assumed that the server 105 receives the connection request 255 from smart phone A 102 first and, thereafter, the connection request 256 from smart phone B 103.

In a connection request reception step 206, the server 105 may retrieve primary comparison data from a currently received connection request. The primary comparison data includes a set of codes that represents user consent to creating a connection. The set of codes may have a predefined position within the connection request, or the set of codes may be preceded by a header, or both, which facilitates retrieval of the set of codes. The server 105 may further retrieve additional comparison data relating to when and where the set of codes has been established and thus relating to when and where consent has been given. The additional comparison data may further include respective names of respective users to be used in the connection to be created. The server 105 may further retrieve validity data from the connection request, which may further include the aforementioned period of validity.

In this example, the server 105 retrieves a set of two codes from the connection request 255 from smart phone A 102, namely the code 251 expressing user A's 106 consent and the code 253 expressing user B's 107 consent. It is further assumed that the server 105 further retrieves the following additional comparison data: the aforementioned indication of time when these codes were exchanged, the aforementioned indication of the location where these codes were exchanged, and the respective names that users A 106 and B 107 want to use in the connection to be created. The server 105 may further retrieve the aforementioned period of validity of user A's code 251 as the validity data.

In the connection request reception step 206, the server 105 may carry out a verification to ensure that a received connection request is authentic. For example, the server 105 may verify whether a communication address from which this request has been sent and a user ID comprised in the request belong to the same registered user, or not. The received connection request is considered authentic only if this verification is positive. The server 105 may carry out a further verification of integrity of the received connection request. It should further be noted that the connection request may be submitted in an encrypted form in order to further enhance security.

In a primary connection request examination step 207, the server 105 compares the set of codes retrieved from the currently received connection request with respective sets of codes retrieved from respective previously received connection requests that are stored in a pending connection request database. In doing so, the server 105 evaluates whether the following condition is true or false: there is a previously received connection request that comprises a set of codes corresponding to the set of codes retrieved from the currently received connection request. This condition will be referred to hereinafter as "corresponding code condition", which may be true or false. The previously received connection request for which the corresponding code condition is true, will be referred to hereinafter as "corresponding connection request".

In case the corresponding code condition is false (F), the server 105 carries out a pending connection request definition step 208. In this step, the server 105 stores the currently received connection request in the pending connection request database. Thereafter, the server 105 awaits, in effect, reception of a subsequent connection request. Upon reception of a subsequent connection request, the server 105 carries out anew the connection request reception step 206 and the primary connection request examination step 207, which have been described hereinbefore. That is, the server 105 awaits, in effect, reception of a subsequent connection request that comprises a set of codes corresponding with the currently received connection request, which has been stored in the pending connection request database.

In this example, the corresponding code condition will be false (F) for the connection request 255 from smart phone A 102, which the server 105 has been assumed to receive first. Consequently, the server 105 will store the connection request 255 from smart phone A 102 in the pending connection request database and, in effect, await reception of the connection request 256 from smart phone B 103. Following reception of the connection request 256 from smart phone B 103, the server 105 will carry out the primary connection request examination step 207 anew. The server 105 will then find that the corresponding code condition is true (T): the aforementioned connection requests 255, 256 comprise corresponding sets of codes. Namely, each connection request 255, 256 comprises the code 251 of user A 106 and the code 253 of user B 107.

In case the corresponding code condition is true (T), the server 105 may carry out a further connection request examination step 209 with respect to the currently received connection request and the corresponding connection request, which has previously been received. In this step, the server 105 evaluates whether the following condition is true or false: the additional comparison data retrieved from the currently received connection request corresponds with the additional examination data comprised in the corresponding connection request. This condition will be referred to hereinafter as "corresponding additional data condition". Evaluating whether the corresponding additional data condition is true or false allows a higher degree of security and reliability than embodiments in which correspondence of codes is verified only.

In case the corresponding additional data condition is false (F), the server 105 may carry out a correspondence failure signaling step 210. In this step, the server 105 may transmit a failure message to the smart phone that has submitted the currently received connection request and the smart phone that has submitted the corresponding connection request. This failure message may specify a data element in these respective connection requests that did not correspond. For example, the correspondence failure message may specify that respective time indications in these respective connection requests did not correspond, or that respective location indications did not correspond, or both, whichever applies. The failure message may comprise an invitation to send a reply back to the server 105 indicating that a non-correspondence may be ignored, thus authorizing creation of the connection despite the non-correspondence.

In the further connection request examination step 209, the server 105 may further evaluate whether the following condition is true or false: the validity data in each connection request indicates that the connection request is still valid. This condition will be referred to hereinafter as "validity condition".

In case the validity condition is false, the server 105 may carry out a validity expiration signaling step. In this step, the server 105 may transmit a validity expiration message to the smart phone that has submitted the currently received connection request. This validity expiration message may specify, for example, that the period of validity specified in the corresponding connection request has expired.

The server 105 may also transmit a further validity expiration message to the smart phone that has previously submitted the corresponding connection request, which specified the period of validity. This further validity expiration message may comprise, for example, an invitation to send a reply back to the server 105 indicating that the validity condition may be ignored, thus authorizing creation of the connection despite the fact that the period of validity has expired. As another example, the validity expiration messages may comprise, for example, an invitation to submit new connection requests.

In this example, the server 105 will carry out the further connection request examination step 209 with respect to the connection requests 255 and 256 from users A 106 and B 107. More specifically, the server 105 will evaluate if the corresponding additional data condition is true or false for the following additional comparison data: the aforementioned indication of time when the codes 251 and 253 of users A 106 and B 107 were exchanged, the aforementioned indication of the location where these codes were exchanged, and the respective names that users A 106 and B 107 want to use in the connection to be created. The server 105 will further evaluate if the validity condition is true or false for the period for validity that user A 106 has specified. In the sequel, it is assumed that the corresponding additional data condition and the validity condition are both true for the connection requests 255 and 256 submitted by users A 106 and B 107.

The server 105 carries out a connection definition step 211 if the corresponding code condition is true (T), as well as the corresponding additional data condition and the validity condition, unless there is derogation as described hereinbefore. In the connection definition step 211, the server 105 defines a connection between respective communication addresses associated with the connection requests for which the aforementioned conditions were evaluated as true. In this example, the server 105 defines a connection between, on the one hand, the identification code 109 of the software application program on smart phone A 102 of user A 106 and, on the other hand, the identification code 110 of the software application program on smart phone B 103 of user B 107.

The server 105 associates a connection identifier 257 with the connection. The connection identifier 257 is preferably unique. The server 105 may generate at least a part of the connection identifier 257 in, for example, a pseudo random fashion. In order to ensure that the connection identifier 257 is unique, the server 105 may include in the connection identifier 257, for example, a hash based on the communication addresses that are connected.

The server 105 may store the connection that has been defined in a connection database. The server 105 may store various data elements in association with the connection, such as, in this example, the user ID of user A 106, the user ID of user B 107, the names that users A 106 and B 107 use in this connection. The server 105 may further store the aforementioned custom data of user A 106, as well as the custom data of user B 107 in association with the connection.

In a connection enabling step 212, the server 105 transmits connection definition data 258 to a communication address of a registered user who has submitted the connection request. The connection definition data 258 includes the connection identifier 257 and may include further data. For example, the connection definition data 258 may include the additional contextual information mentioned hereinbefore indicating, for example, when and where users have exchanged the codes that enabled creating the connection. The connection definition data may be embedded, for example, in a connection confirmation message that informs a user that he/she is now connected to another user. In this example, the server 105 transmits the connection identifier 257 to the smart phones A 102 and B 103 of users A 106 and B 107. This transmission can be in the form of, for example, a message directed to the software application programs installed on smart phones A 102 and B103.

It should be noted that the connection definition data 258 need not necessarily be communicated to a communication address that is specified in the connection. The server 105 may use, for this purpose, another communication address of a user who participates in the connection. For example, the connection definition data 258 may be transmitted by means of an e-mail message or an SMS message, SMS being an acronym of Short Message Service. What matters is that the connection definition data 258, which includes the connection identifier 257, is available to the user.

In a connection implementing step 213, smart phone A 102 receives from the server 105 the connection definition data 258, which includes the connection identifier 257. Smart phone A 102 may then carry out various operations following this reception. For example, smart phone A 102 may add user B 107 to the contact list of user A 106. In case user B 107 was represented as a provisional, non-active item, he/she may now be represented as an active contact in the contact list of user A 106. This representation of user B 107 in the contact list may be in accordance with the graphical representation that user A 106 has specified in the connection customization step 203 described hereinbefore. Smart phone A 102 may send an acknowledgment message to the server 105 confirming that user B 107 has been added to the contact list of user A 106. Smart phone B may carry out a similar connection implementing step, comprising operations described hereinbefore.

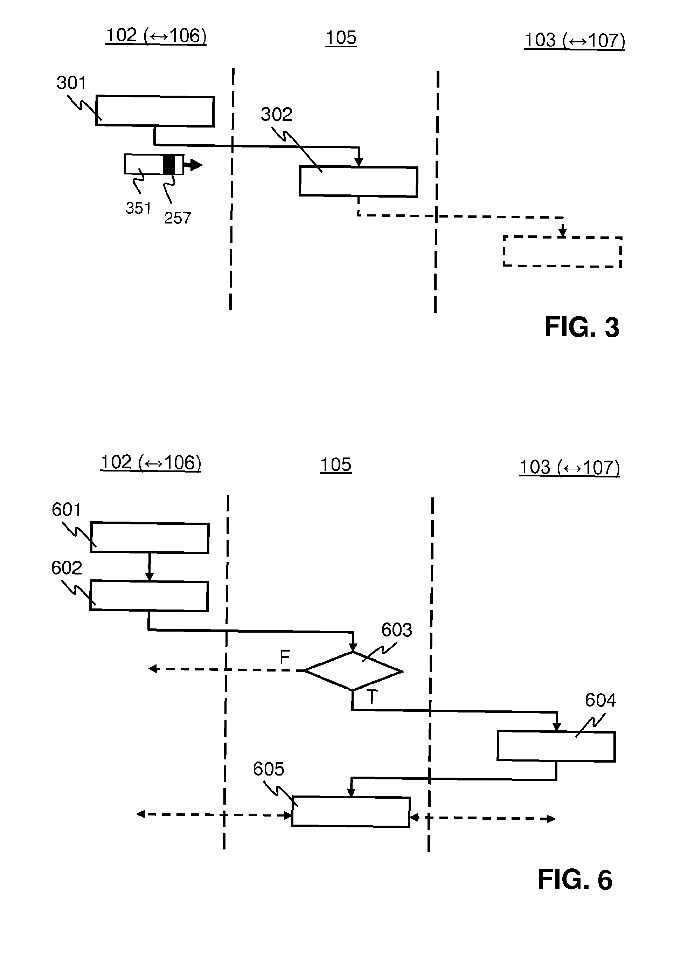

FIG. 3 schematically illustrates a method of communicating that can be carried out once the method of creating a connection described hereinbefore with reference to FIG. 2 has been completed. The method is illustrated in a flow chart. General remarks made hereinbefore with regard to the flow chart illustrated in FIG. 2 equally apply to the flow chart illustrated in FIG. 3.

In this example, it is assumed that the server 105 has created the connection between, on the one hand, the identification code 109 of the software application program on smart phone A 102 of user A 106 and, on the other hand, the identification code 110 of the software application program on smart phone B 103 of user B 107. The server 105 has generated the connection identifier 257, which is associated with this connection. User A 106 and user B 107 can now send each other messages through the software application program, without knowing each other's communication addresses. This prevents uncontrolled dissemination of communication addresses.

In a message sending step 301, smart phone A 102 receives an instruction from user A 106 that a message should be addressed to user B 107. For example, user A 106 may select user B 107 from the contact list that smart phone A 102 displays its touch display screen. Subsequently, smart phone A 102 receives an instruction that the message should be sent. Smart phone A 102 may then package the message in an outgoing message 351 directed to the server 105. In doing so, smart phone A 102 includes the connection identifier 257 of the connection between users A 106 and B 107 in this outgoing message 351. Smart phone A 102 may also include user A's 106 user ID.

In a message routing step 302, the server 105 receives the outgoing message 351 from smart phone A 102. Upon this reception, the server 105 may carry out a verification, as described hereinbefore, to ensure that this received message indeed originates from user A 106. The server 105 retrieves the connection identifier 257 from the received message 351. Subsequently, the server 105 may search in the connection database to identify the communication addresses associated with the connection identifier 257. In this example, these are the identification codes 109 and 110 associated with users A 106 and B 107, respectively. Since the received message originates from user A 106, the server 105 knows, as it were, that the message concerned should be routed to the software application program on smart phone B 103 of user B 107. Consequently, the server 105 sends the message from user A 106 to user B 107. The server 105 may do so without disclosing any communication address of user A 106. For example, in case an e-mail connection has been established too, user B 107 may receive an e-mail message from user A 106 specifying an e-mail address associated with the server 105 with a mention "on behalf of user A".

The server 105 may keep a history of messages that users A 106 and B 107 have exchanged by means of the connection that has been created on their request. Users A 106 and B 107 may consult this history through, for example, the respective user accounts. The server 105 may delete this history when the connection no longer exists.

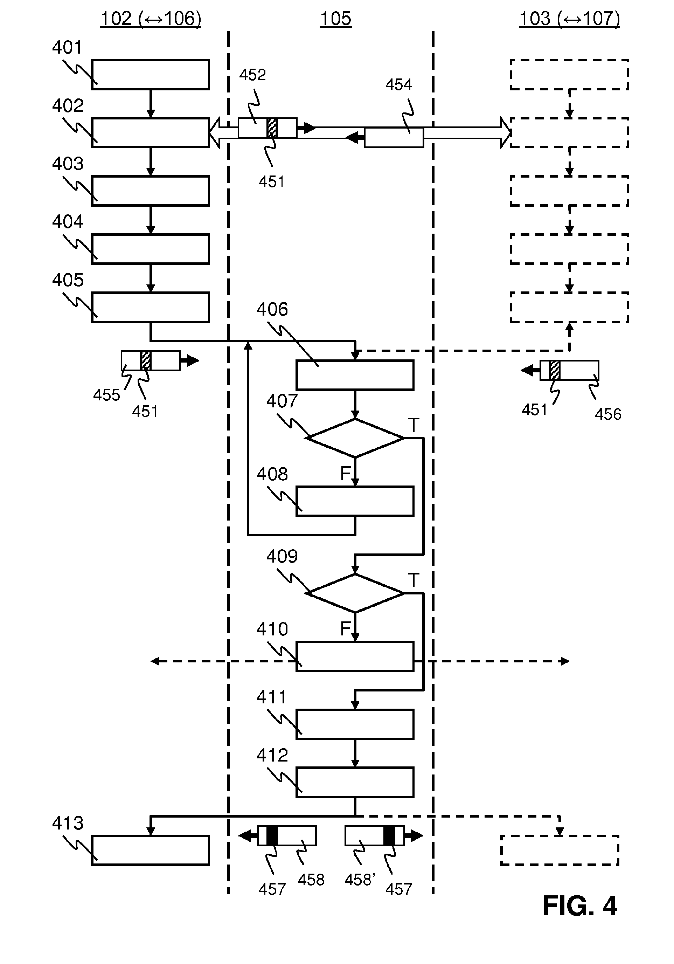

FIG. 4 schematically illustrates an alternative method of creating a connection between a communication address of user A 106 and a communication address of user B 107. The method is illustrated in a flow chart. General remarks made hereinbefore with regard to the flow chart illustrated in FIG. 2 equally apply to the flow chart illustrated in FIG. 4.

A main feature of the alternative method is that the connection is created on the basis of a set of codes that comprises a single code only. This single code represents consent of one registered user only to creating the connection with another registered user. The other registered user implicitly consents to creating the connection by submitting the connection request to the server 105. The alternative method is thus characterized by unilateral explicit consent. The single code that expresses this consent may be relatively strong because, for example, this code is relatively long and complex.

The alternative method comprises a series of steps similar to the series of steps of the method illustrated in FIG. 2, which has been described hereinbefore. Consequently, these steps are named similarly with "alternative" as an adjective, which is added for reasons of convenience and distinction between the methods concerned.

In an alternative connection request initiation step 401, smart phone A 102 carries out operations similar to those in the connection request initiation step 201 described hereinbefore. However, in the alternative method, smart phone A 102 may receive an indication from user A 106 that a code 451 will unilaterally be provided to user B 107. That is, smart phone A 102 is informed beforehand, as it were, that no code will be provided by user B 107.

Smart phone B 103 may carry out a complementary alternative connection request initiation step 401, in which smart phone B 103 may receive an indication from user B 107 that a code will unilaterally be received from user A 106. That is, smart phone A 102 is instructed, as it were, that no code needs to be provided to user A 106.

In an alternative connection creation data exchange step 402, smart phone A 102 transmits connection creation data 452 of user A 106 to user B 107 in a manner defined by user A 106, or in a default manner. The connection creation data 452 of user A 106 comprises the single code 451 that represents user A's 106 unilateral explicit consent to creating the connection. The connection creation data 452 may further comprise the name under which user A 106 presents himself/herself in this connection. Smart phone B 103 may carry out a complementary alternative connection creation data exchange step 402, in which smart phone B 103 may transmit connection creation data 454 of user B 107 to user A 106. However, this connection creation data need not comprise a code expressing user B's 107 consent to creating the connection.

In an alternative connection customization step 403, smart phone A 102 carries out operations similar to those in the connection customization step 203 described hereinbefore. In fact, these aforementioned steps may be identical. However, the graphical representation of user B 107 may indicate here that the connection to be created is based on a unilateral explicit consent, in the example user A's 106 consent.

In an alternative connection request generation step 404, smart phone A 102 generates a connection request 455 for submission to the server 105. Here, the connection request 455 has a set of codes that comprises the single code 451 only, which user A 106 has unilaterally provided to user B 107. In this case, there is no counterparty code from the point of view of user A 106. There is no own code from the point of view of user B 107. Apart from this, the connection request 455 may be similar to the connection request 255 that smart phone A 102 generates in the method illustrated in FIG. 2 described hereinbefore. An indication on when and where the alternative connection creation data exchange step 402 was carried out, will pertain to the transmission of the single code 451 only, from user A 106 to user B 107.

In an alternative connection request submission step 405, smart phone A 102 may carry out operations similar to those in the connection request submission step 205 described hereinbefore.

In an alternative connection request reception step 406, the server 105 may carry out operations similar to those in the connection request reception step 206 described hereinbefore. However, here the set of codes that the server 105 retrieves from the currently received connection request, comprises the single code 451 only, which expresses user A's 106 unilateral explicit consent to creating the connection. For the rest, the server 105 may retrieve additional comparison data and validity data from the currently received connection request as described hereinbefore with respect to the method illustrated in FIG. 2. The server 105 may also carry out verification as described hereinbefore.

In an alternative primary connection request examination step 407, the server 105 may carry out operations similar to those in the primary connection request examination step 207 described hereinbefore. Here the corresponding code condition will pertain to the single code 451 that was retrieved from the currently received connection request. The server 105 may limit an evaluation whether this condition is true or false to previously received connection requests that also comprise a single code 451 only.

In an alternative pending connection request definition step 408 and in an alternative further connection request examination step 409, the server 105 may carry out operations similar to those in the pending connection request definition step 208 and in the further connection request examination step 209, respectively, described hereinbefore. That is, the server 105 may evaluate whether the corresponding additional data condition is true or false, and carry out similar operations depending on whether this condition was found to be true or false. For example, the server 105 may carry out an alternative correspondence failure signaling step 410 similar to the correspondence failure signaling step 210 described hereinbefore.

In an alternative connection definition step 411 and in an alternative connection enabling step 412, the server 105 may carry out operations similar to those in the connection definition step 211 and in the connection enabling step 212, respectively, described hereinbefore. That is, the server 105 defines the connection and associates a connection identifier 457 with this connection. The server 105 then transmits the connection identifier 457 to users A 106 and B 107 who have requested the connection, or, more precisely, to their respective smart phones A 102 and B 103. As described hereinbefore, the server 105 may transmit the connection identifier 457 as part of connection definition data 458 that is sent to these smart phones.

In an alternative connection implementing step 413, smart phone A 102 may carry out operations similar to those in the connection implementing step 213 described hereinbefore. Smart phone B 103 may carry out a similar step.

The method of creating a connection illustrated in FIG. 2 can be used, at least partially, for creating and expanding a group of registered users, who can then communicate through this connection. The same applies to the alternative method of creating a connection illustrated in FIG. 4.

A group may start with a connection between two users, for example between users A 106 and B 107 as described hereinbefore. In the connection request initiation step 201, smart phone A 102 may then receive an indication from user A 106 that a group connection is to be created, rather than a bilateral connection with user B 107. Smart phone A 102 may then prompt user A 106 to specify a name for this group connection, that is, a name for the group to be created. Smart phone A 102 may further prompt user A 106 to specify, in addition, a name under which he/she wants to present himself/herself in the group. Smart phone A 102 could also offer user A 106 further or other options for that purpose, such as, for example, specifying a color of presentation, an avatar, or any other type of graphical presentation.

Smart phone A 102 may further prompt user A 106 to define an admission scheme for the group. For example, user A 106 may define that the group is open in the sense that any member of the group can invite and make another person member of the group. As another example, user A 106 may define that membership of the group can be acquired only through an administrator of the group. Only an administrator can invite and make another person member of the group. User A 106, who creates the group, may be, for example, a first administrator. As yet another example, smart phone A 102 may allow user A 106 to define a period of time during which other persons may join the group after which the group will be closed in the sense that no new members are allowed. Yet another example concerns the possibility to define a numerus clausus, a maximum number of persons that can be member of the group.

Smart phone A 102 may further offer user A 106 various options to define further properties of the group. For example, smart phone A 102 may allow user A 106 to define a lifetime of the group. Once this lifetime has expired, the server 105 group may automatically delete the group together with all messages that have been exchanged in the group.

In this example, where the group starts with users A 106 and B 107, the server 105 defines a connection of the group type between a communication address of user A 106 and a communication address of user B 107. The server 105 associates a connection identifier with this connection. This identifier will be referred to hereinafter as group identifier. The server 105 may store the group identifier in a group database as part of group definition data. This group definition data may further comprise, for example, the user IDs of user A 106 and B, as well as the respective names that these users use in the group. The group definition data may also comprise custom data of users that form part of the group.

In this example, the server 105 transmits the group identifier to smart phone A 102 and smart phone B 103. Smart phones A 102 and B 103 may then add the group to the contact list of users A 106 and B 107, respectively. User A 106 can now invite and make user C 108 member of the group if user A 106 is authorized to do so, which will be assumed to be the case.

It should be noted that a group may also start with a connection between three or more users. The method of creating a connection described hereinbefore with reference to FIG. 2 can be slightly modified to allow for creating such a multilateral connection. Basically, creating a multilateral connection may involve exchanging three or more codes and including these in a connection request. Respective codes originate from respective users, whereby a code represents a user's consent to creating the connection. That is, the set of codes that the server 105 will receive and examine may comprise three or more codes, whereby the number of codes may correspond with the number of users that request the multilateral connection, which causes them to form a group.

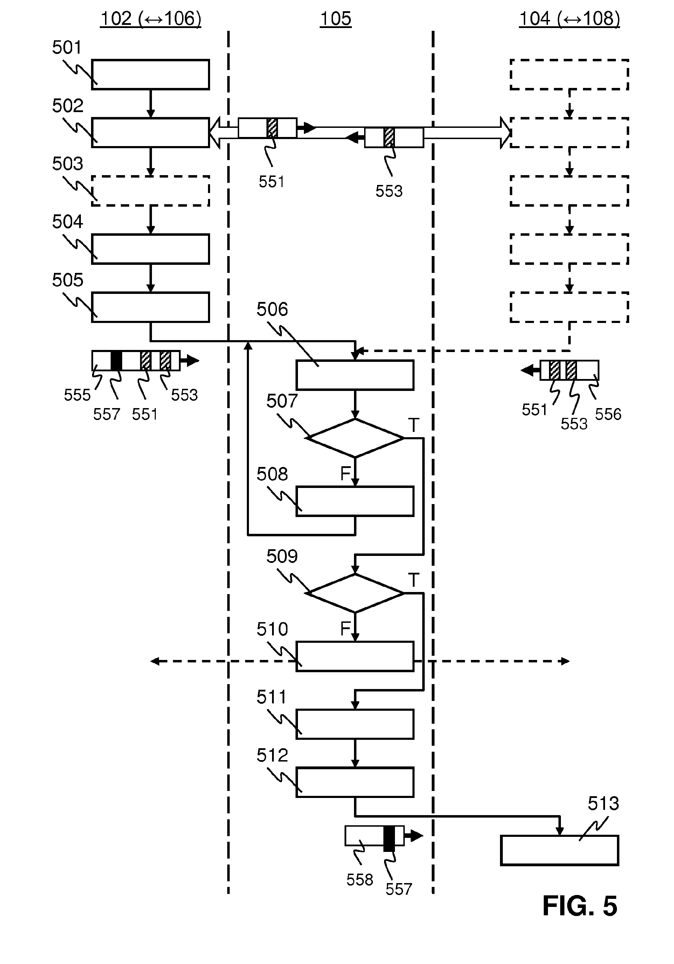

FIG. 5 schematically illustrates a group-joining method, which allows a user who is already member of the group to invite and make another user member of the group. The method is illustrated in a flow chart. General remarks made hereinbefore with regard to the flow chart illustrated in FIG. 2 equally apply to the flow chart illustrated in FIG. 5.

The group-joining method comprises a series of steps similar to at least a subset of the series of steps of the method illustrated in FIG. 2, or a subset of the series of steps of the alternative method illustrated in FIG. 4, which have been described hereinbefore. Consequently, these steps are named similarly, wherever appropriate, with "group-joining" as an adjective, which is added for reasons of convenience and distinction between the methods concerned. By way of example, it is assumed here that user A 106 has already formed a group with user B 107 as described hereinbefore, and now wants to invite and make user C 108 member of the group.

In a group-joining request initiation step 501, smart phone A 102 receives an indication from user A 106 that the connection to be made is for another person joining the group. User A 106 need not define a name for himself/herself in the group, because he/she has already done so in creating the group. For the rest, smart phone A 102 may carry out operations similar to those in the connection request initiation step 201 of the method illustrated in FIG. 2.

In a group-joining data exchange step 502, smart phone A 102 may carry out operations similar to those in the connection creation data exchange step 202 of the method illustrated in FIG. 2, except that the operations are now carried out with respect to smart phone C 104. In this step, smart phone A 102 and smart phone C 104 may exchange codes 551, 553 representing their consent to user C 108 joining the group. A group-joining customization step 503 need not be carried out by smart phone A, but such a step may be carried out by smart phone C 104 to allow user C 108 to define some characteristics of him/her in the group.

In a group-joining request generation step 504, smart phone A 102 may carry out operations similar to those in the connection request generation step 204 of the method illustrated in FIG. 2, except for the following difference. Smart phone A 102 generates a group-joining request 555 that may be similar to the connection request described hereinbefore. However, smart phone A 102 includes the group identifier, or another identification of the group, in the group-joining request. In FIG. 5, reference numeral 557 designates the group identifier.

In a group-joining request submission step 505, smart phone A 102 may carry out operations similar to those in the connection request submission step 205 of the method illustrated in FIG. 2. In fact, these steps may be identical.

In a group-joining request reception step 506, the server 105 may carry out operations similar to those in the connection request reception step 206 of the method illustrated in FIG. 2, except for the following difference. The server 105 retrieves the group identifier 557 from the group-joining request.

The server 105 may then carry out a primary group-joining request examination step 507, a pending group-joining request definition step 508, and a further group-joining request examination step 509 similar to the primary connection request examination step 207, the pending connection request definition step 208, and the further connection request examination step 209, respectively, described hereinbefore. That is, the server 105 evaluates whether the corresponding code condition described hereinbefore is true or false. The server 105 may further evaluate whether the corresponding additional data condition and the validity condition, if applicable, are true or false. The server 105 may carry out a group-joining failure signaling step 510 in case any of these conditions is false.

The server 105 carries out a group connection redefinition step 511 if the corresponding code condition is true, as well as the corresponding additional data condition and the validity condition, unless there is derogation as described hereinbefore. In the group connection redefinition step 511, the server 105 redefines the connection of the group type between the respective communication addresses of users A 106 and B 107 by adding a communication address of user C 108 to this connection. Following reception of the group-joining request 555, the server 105 determines that user A 106 is already member of the group, whereas user C 108 is not, so it logically follows that user C 108 is the one to be added to the group. The server 105 may update data pertaining to the group in the group database by, for example, associating the user ID of user C 108 to the group identifier 557.

In a group-joining enabling step 512, the server 105 may transmit the group 557 identifier to smart phone C 104 of user C 108, who has joined the group. Similar to what has been described hereinbefore, the server 105 may transmit the group identifier 557 as part of group-joining data 558 that is sent to this smart phone.

In a group-joining connection implementing step 513, smart phone C 104 may carry out operations similar to those in the connection implementing step 213 described hereinbefore but, here, with respect to the group that user C 108 has joined.

It should be noted a user may withdraw himself/herself from a connection or a group that has been created as described hereinbefore with reference to figures 2, 4, and 5. To that end, the user may instruct his/her smart phone to prepare and transmit a withdrawal request to the server 105. Upon reception of this withdrawal request, the server 105 may then remove the user from the connection. The server 105 may also erase all data of this user in relation with the connection, or the group, whichever applies. For example, the server 105 may erase a history of all messages that the user has sent, or received, by means of this connection or group. The server 105 may send an acknowledgment to the user who has submitted the withdrawal request, as well as a withdrawal information message to other users that participate in the connection of a group concerned.

Upon reception of the acknowledgment, or even prior thereto, the smart phone of the user who has submitted the withdrawal request may then erase from his/her contact list all items that were associated with the connection concerned. For example, in case the connection was with a group, the group will be erased from the contact list. In case the connection was with another user, the other user will be erased from the contact list. In the latter case, if the connection is between two users only, such as, for example, users A 106 and B 107, the connection will, in effect, cease to exist if one of two users withdraws himself/herself. In this case, the server 105 may delete the connection from the connection data base and confirm, or inform, the two users that they are no longer connected.

FIG. 6 schematically illustrates a method of transposing a connection that has been created between communication addresses of a given type to a connection between communication addresses of another type. For example, user A 106 may wish to transpose a software application program connection with user B 107, which has been created as described hereinbefore, to a connection between them on a social medium. The method of transposing, which allows doing so, is illustrated in a flow chart and described hereinafter. General remarks made hereinbefore with regard to the flow chart illustrated in FIG. 2 equally apply to the flow chart illustrated in FIG. 6.

In a transposition initiation step 601, smart phone A 102 receives an indication from user A 106 that he/she wishes to transpose the existing connection with user B 107. Smart phone A 102 may then display a list of other types of connections that are available, which are related to the communication addresses user A 106 has defined with the server 105. It is assumed here that user A 106 selects a social medium from this list.

In a transposition invitation step 602, smart phone A 102 generates an invitation for user B 107 to transpose the existing connection to the social medium. This invitation may be a message that comprises, for example, an "accept" button that can be activated by, for example, clicking on this button when displayed. This invitation message may further include a link to a profile of user A 106 on the social medium concerned. Alternatively, the server 105 may automatically include this link in the invitation message, or make this link available at a later stage only, as described hereinafter. Smart phone A 102 may send the invitation message to user B 107 using the existing connection, according to the method of communicating as described hereinbefore with reference to FIG. 3.

In a transposition examination step 603, the server 105 may detect and examine the invitation message from user A 106. For example, the server 105 may verify whether the following condition is true or false: user B 107 has specified a communication address on the social medium concerned. That is, user B 107 has specified to have an account on the social medium. In case this social medium condition is false, the server 105 sends a failure message to user A 106 informing him/her that the connection cannot be transposed to the social medium concerned. In case the social medium condition is true, the server 105 may send the invitation message to smart phone B 103. Before doing so, the server 105 may include in the invitation message a link to a profile of user A 106 on the social medium concerned. This link may be available from user A's 106 account with the server 105.

In a transposition acceptance step 604, smart phone B 103 receives and displays the invitation message, which is assumed to include the aforementioned accept button. It is assumed that user B 107 accepts the invitation of user A 106 to transpose their existing connection to the social medium. Smart phone B 103 thus detects that user B 107 clicks on the accept button. Smart phone B 103 then generates an acceptance message for user A 106. The acceptance message may include a link to a profile of user B 107 on the social medium concerned. Alternatively, the server 105 may automatically include this link in the acceptance message, or make this link available at a later stage only, as described hereinafter. Smart phone B 103 may send the acceptance message to user A 106 using the existing connection, according to the method of communicating as described hereinbefore with reference to FIG. 3.

In a transposition finalization step 605, the server 105 may detect the acceptance message from user B 107. The server 105 may then generate a transposition notification message for user A 106 and user B 107, in particular if the link to the profile of user A 106 has not yet been made available to user B 107, and vice versa. The transposition notification message may then comprise these links. The server 105 may then temporarily prevent user A 106 and user B 107 from deleting their connection. This inhibition is maintained until the server 105 has been detected that user A 106 has activated the link to the profile of user B 107 and, reciprocally, that user B 107 has activated the link to the profile of user A 106. Accordingly, it is prevented that a user may abuse a connection, as it were, for seeing the profile of the another user, while preventing the other user from seeing his/her profile.

### NOTES

The detailed description hereinbefore with reference to the drawings is merely an illustration of the invention and the additional features, which are defined in the claims. The invention can be implemented in numerous different ways. In order to illustrate this, some alternatives are briefly indicated.

The invention may be applied in numerous types of products or methods related to defining a connection between two communication addresses. For example, the invention may be applied in any type of communication device, such as, for example, a so-called smart watch.

The invention may be implemented in numerous manners. For example, a server may define a single connection identifier for a connection that the server has created in accordance with the invention. This single connection identifier may then be transmitted to respective registered users that participate in the connection. As another example, the server may define respective identifiers for a same connection, which are transmitted to respective registered users that participate in this connection.

A code, which is to be communicated to another user as a token of consent to creating a connection, may be printed on a business card. This implies that the code has been predefined. In a set of business cards, a different code may be printed on each card. That is, the code on a business card may be unique. A user may order such a set of business cards through, for example, an application software program in accordance with the invention, which may carry out operations that have been described hereinbefore. It should be noted that a code can be expressed in various forms, such as, for example, a data matrix or any other type of graphical representation that can be printed on a business card.

The term "communication address" should be understood in a broad sense. The term may embrace any indication associated with an entity, either physical or logical, or both, which allows routing information to this entity, or which allows recognizing that information has been issued by that entity, or both.

In general, there are numerous different ways of implementing the invention, whereby different implementations may have different topologies. In any given topology, a single module may carry out several functions, or several modules may jointly carry out a single function. In this respect, the drawings are very diagrammatic. There are numerous functions that may be implemented by means of hardware or software, or a combination of both. A description of a software-based implementation does not exclude a hardware-based implementation, and vice versa. Hybrid implementations, which comprise one or more dedicated circuits as well as one or more suitably programmed processors, are also possible. For example, various functions described hereinbefore with reference to the figures may be implemented by means of one or more dedicated circuits, whereby a particular circuit topology defines a particular function.

There are numerous ways of storing and distributing a set of instructions, that is, software, which allows stabling a communication link between two communication addresses in accordance with the invention. For example, software may be stored in a suitable device readable medium, such as, for example, a memory circuit, a magnetic disk, or an optical disk. A device readable medium in which software is stored may be supplied as an individual product or together with another product, which may execute the software. Such a medium may also be part of a product that enables software to be executed. Software may also be distributed via communication networks, which may be wired, wireless, or hybrid. For example, software may be distributed via the Internet. Software may be made available for download by means of a server. Downloading may be subject to a payment.

The remarks made hereinbefore demonstrate that the detailed description with reference to the drawings is an illustration of the invention rather than a limitation. The invention can be implemented in numerous alternative ways that are within the scope of the appended claims. All changes that come within the meaning and range of equivalency of the claims are to be embraced within their scope. Any reference sign in a claim should not be construed as limiting the claim. The word "comprising" does not exclude the presence of other elements or steps than those listed in a claim. The word "a" or "an" preceding an element or step does not exclude the presence of a plurality of such elements or steps. The mere fact that respective dependent claims define respective additional features, does not exclude combinations of additional features other than those reflected in the claims.

## Claims

1. A method of creating a connection between several communication addresses (109, 110) by means of an intermediate entity (105) having a plurality of registered users (106, 107,108), whereby a registered user has at least one communication address, in which method the intermediate entity carries out:
- a connection definition step (211) in which the intermediate entity defines a connection between respective communication addresses (109, 110) of respective registered users (106, 107), the connection being defined upon reception of respective connection requests (255, 256) from these respective registered users if their respective connection requests comprise a same set of codes (251, 253); and
- a connection enabling step (212) in which the intermediate entity transmits connection definition data (258) to a communication address of a registered user (106) who has submitted the connection request, the connection definition data including a connection identifier (257) for inclusion in a message (351) from a communication address (109) of the registered user in the connection so that the intermediate entity can route this message to other communication addresses (110) in the connection.

2. A method of creating a connection between several communication addresses (109, 110), the method involving an intermediate entity (105) having a plurality of registered users (106, 107, 108), whereby a registered user has at least one communication address, the intermediate entity being adapted to carry out the method according to claim 1, in which method a communication device (102) of a registered user (106) carries out:
- a connection request generation step (204) in which the communication device generates a connection request (255) comprising a set of codes (251, 253) that includes an own code (251) that is transmitted to another registered user (107) for inclusion in a connection request (256) to be submitted by the other registered user to the intermediate entity;
- a connection request submission step (205) in which the communication device transmits the connection request to the intermediate entity, the intermediate entity defining a connection between a communication address (109) of the registered user and a communication address (110) of the other registered user, the connection being defined upon reception of the connection request and the connection request from the other registered user that comprises the same set of codes; and
- a connection implementing step (213) in which the communication device receives connection definition data (258) from the intermediate entity, the connection definition data including a connection identifier (257) for inclusion in a message (351) from the communication address of the registered user so that the intermediate entity can route the message to the communication address of the other registered user.

3. A method of creating a connection according to claim 2 comprising a series of steps that precede the connection request generation step (205):
- a connection request initiation step (201) in which the communication device (102) generates the own code (251) in a one-time fashion; and
- a connection creation data exchange step (202) in which the communication device transmits the own code to the other registered user (107) for inclusion in the connection request (256) to be submitted by the other registered user to the intermediate entity (105).

4. A method of creating a connection according to claim 3 wherein, in the connection creation data exchange step (202), the communication device (102) displays the own code (251) on a display screen so that another communication device (103), which belongs to the other registered user (107), can capture this code by means of a camera device.

5. A method of creating a connection according to claim 4 wherein, in the connection creation data exchange step (202), the communication device (102) displays the own code (251) on the display screen in the form of a data matrix.

6. A method of creating a connection according to any of claims 3 to 5 wherein, in the connection creation data exchange step (202), the communication device (102) transmits the own code (251) to the other registered user (107) in association with complementary data specifying a name of the registered user.

7. A method of creating a connection according to any of claims 2 to 6, wherein, in the connection request generation step (205), the communication device (102) includes in the set of codes a counterparty code (253) that has been received from the other registered user (107).

8. A method of creating a connection according to any of claims 2 to 7, wherein, in the connection request generation step (205), the communication device (102) includes in the connection request (255) at least one of the following data items: a name of the registered user (106), an indication of a location where the own code (251) has been transmitted to the other registered user (107), an indication of an instant when the own code has been transmitted to the other registered user, and a category to which the connection of which the creation is requested should be assigned.

9. A method of creating a connection according to any of claims 2 to 8, wherein, in the connection implementing step (213), the communication device (102) adds the other registered user (107) to a contact list in association with the connection identifier (257).

10. A method of creating a connection according to any of claims 2 to 9 comprising a step following the connection implementing step (213):
- a transposition invitation step (602) in which the communication device (102) generates a transposition invitation message directed to the other registered user (107), the transposition invitation message defining another connection between the registered user (106) and the other registered user, involving other communication addresses, and a data item by means of which the other registered user can accept creation of the other connection.

11. A method of creating a connection according to claim 1 wherein the connection definition step (211) is preceded by a connection request examination step (209) in which the intermediate entity (105) verifies whether the respective connection requests (255, 256) from the respective registered users (106, 107) have been received within a predefined time interval, or not, the intermediate entity defining the connection only if the respective connection requests have been received within the predefined time interval.

12. A method of creating a connection according to any of claims 1 and 11 wherein the respective connection requests (255, 256) comprise complementary data in addition to the set of codes (251, 253), the complementary data specifying at least one of the following: an indication of a location where the set of codes has been generated , an indication of an instant when the set of codes has been generated, and wherein, in the connection request examination step (209), the intermediate entity (105) verifies whether the complementary data comprised in the respective connection requests corresponds, or not, the intermediate entity defining the connection only if the complementary data corresponds.

13. A method of creating a connection according to any of claims 1, 11, and 12 wherein, in the connection enabling step (212), the intermediate entity (215) includes in the connection definition data (258) at least one of the following: a name of another registered user who is associated with another communication address in the connection, an indication of a location where the set of codes has been established, an indication of an instant when the set of codes has been established, and a category to which the connection should be assigned.

14. A communication device comprising a processor programmed to carry out the method according to any of claims 1 to 13.

15. A computer program comprising a set of instructions that enables a processor, which is capable of executing the set of instructions, to carry out the method according to claim according to any of claims 1 to 13.
